# EUROPEAN PATENT APPLICATION

(11) **EP 2 395 410 A2**
(43) Date of publication of application: **14.12.2011**
(21) Application number: 10014598.6
(22) Date of filing: 14.11.2010
(51) Int. Cl.: G06F 1/16

(54) **Computer system and docking station thereof**

(30) Priority: 10.06.2010 TW 99118873
(71) Applicant: Giga-Byte Technology Co., Ltd., Taipei-Hsien (TW)
(72) Inventor: Ma, Mou-Ming, Hsin-Tien Taipei 231 (TW); Liu, Yi-Yuan, Hsin-Tien Taipei 231 (TW); Kao, Chien-Chih, Hsin-Tien Taipei 231 (TW)
(74) Representative: Schwerbrock, Florian

(57) **Abstract**

A base which allows a portable electronic device to be attached thereto is provided. The base includes a first member, a second member and a pivot element. The first member includes an external connection port. The second member includes a socket. The pivot element is connected to the first member and the second member, the second member is pivoted relative to the first member between a first orientation and a second orientation via the pivot element, and the portable electronic device is detachably attached into the socket to stand on the second member.

## Description

### CROSS REFERENCE TO RELATED APPLICATIONS

This Application claims priority of Taiwan Patent Application No. 099118873, filed on Jun 10, 2010, the entirety of which is incorporated by reference herein.

### BACKGROUND OF THE INVENTION

### Field of the Invention

The present invention relates to a computer system, and in particular relates to a computer system with a rotatable base.

### Description of the Related Art

A conventional base of a computer system is utilized so that a computer box can stand upright, wherein the computer box is also prevented from toppling over. Conventionally, the base only provides the function of supporting the computer box. The base is not electrically connected to the computer box. Additionally, when the computer box and the base are arranged on a desk, location of the computer box and the base is permanent.

### BRIEF SUMMARY OF THE INVENTION

The embodiment of the invention provides a base which allows a portable electronic device to be attached thereto. The base includes a first member, a second member and a pivot element. The first member includes an external connection port The second member includes a socket. The pivot element is connected to the first member and the second member, the second member is pivoted relative to the first member between a first orientation and a second orientation via the pivot element, and the portable electronic device is detachably attached into the socket to stand on the second member.

The embodiment of the invention also provides a computer system including an externally connected display, a portable electronic device and a base. The portable electronic device includes a body and a screen, wherein the screen is connected to the body, and the portable electronic device is electrically connected to the externally connected display. The base includes a first member, a second member and a pivot element, wherein the pivot element is connected to the first member and the second member, the second member is pivoted relative to the first member between a first orientation and a second orientation via the pivot element, and the portable electronic device is detachably attached into the socket to stand on the second member.

When utilizing the computer system of the embodiment, the second member is in the second orientation, and the screen is therefore facing the user. The portable electronic device shows an image via the externally connected display and the screen. A user can select the externally connected display or the screen to show a window. Utilizing the embodiment of the invention, a user can modify orientation of the screen of the portable electronic device, and the base can sufficiently support the portable electronic device.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

Fig. 1A shows a computer system of a first embodiment of the invention, wherein a second member of a base is in a first orientation;

Fig. 1B shows the computer system of the first embodiment of the invention, wherein the second member of the base is in a second orientation;

Fig 2A shows detailed structure of the base, wherein the second member of the base is in the second orientation;

Fig. 2B is an exploded view of the base;

Fig. 2C shows detailed structure of the base, wherein the second member of the base is in the first orientation;

Fig. 3 shows a base of a modified example of the invention;

Fig. 4 shows a base of a second embodiment of the invention; and

Fig. 5 shows a base of a third embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

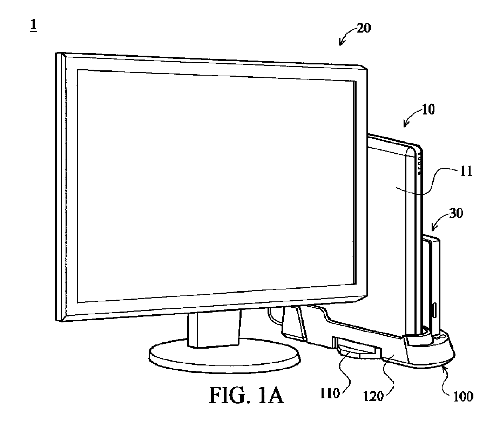

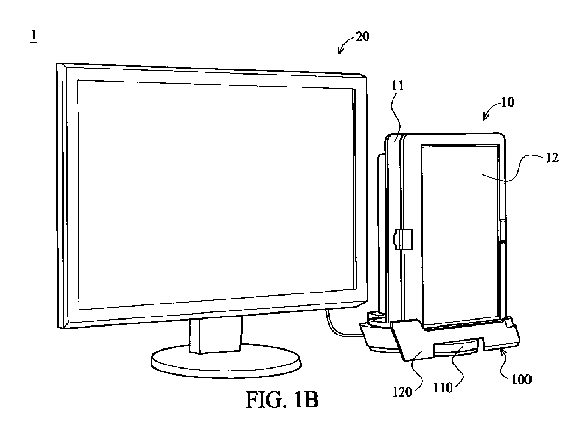

Figs. 1A and 1B show a computer system 1 of a first embodiment of the invention. The computer system 1 includes a portable electronic device 10 (notebook, flat panel computer or other portable computers), an externally connected display 20 (desktop display or other type display) and a base 100. The portable electronic device 10 includes a body 11 and a screen 12. The screen 12 is connected to the body 11. The portable electronic device 10 is electrically connected to the externally connected display 20. The base 100 includes a first member 110 and a second member 120, wherein the first member 110 is connected to the second member 120, wherein the second member 120 is pivoted relative to the first member 110 between a first orientation (as shown in Fig. 1A) and a second orientation (as shown in Fig. 1 B), and the portable electronic device 10 is detachably disposed on the second member 120.

With reference to Fig. 1B, when utilizing the computer system 1 of the embodiment, the second member 120 is in the second orientation, and the screen 12 is therefore facing a user. The portable electronic device 10 shows an image via the externally connected display 20 and the screen 12. A user can select the externally connected display 20 or the screen 12 to show a window. Utilizing the embodiment of the invention, a user can modify orientation of the screen 12 of the portable electronic device 10, and the base 100 can sufficiently support the portable electronic device 10.

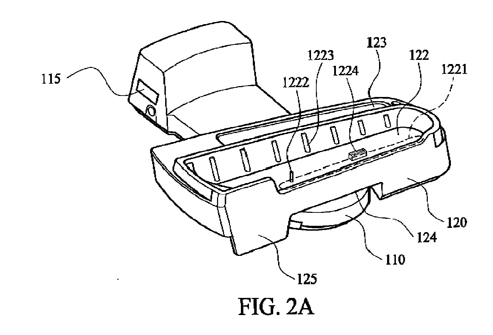

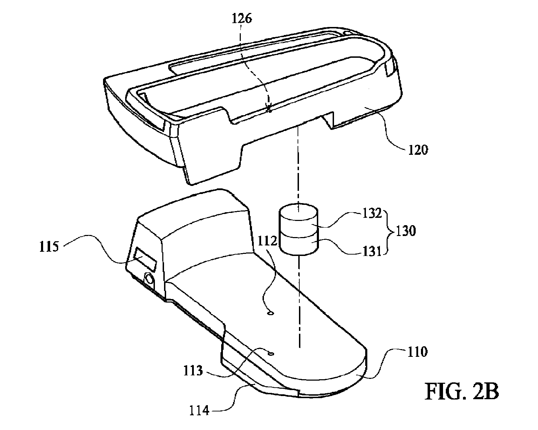

Figs. 2A and 2B show detailed structures of the base 100. With reference to Fig. 2B, the base 100 further includes a pivot element 130. The pivot element 130 includes a first portion 131 and a second portion 132. The first portion 131 is connected to the first member 110, and the second portion 132 is connected to the second member 120. The first portion 131 is pivoted relative to the second portion 132. The pivot element 130 is connected to the first member 110 and the second member 120 by wedging, screw fixing or other means. The second member 120 is therefore pivoted relative to the first member 110.

With reference to Fig. 2A, the second member 120 includes a socket 122, an expansion slot 123, a bottom surface 124 and at least one supporting element 125, The supporting element 125 protrudes from the bottom surface 124. When the second member 120 is in the second orientation, the supporting member 125 contacts a supporting surface (for example, desk) to support the base 100. The portable electronic device 10 is attached into the socket 122. The socket 122 has a notch 1221. When the portable electronic device 10 is disposed in the socket 122, the screen 12 faces the notch 1221, so that the screen 12 can be fully watched by a user without obstruction by the edge of the socket 122. The socket 122 further has a positioning post 1222, a plurality of ribs 1223 and a main connector 1224. The ribs 1223 are formed on a side wall of the socket 122. The main connector 1224 is disposed in the socket 122. When the portable electronic device 10 is disposed in the socket 122, the positioning post 1222 is inserted into the portable electronic device 10 to position the portable electronic device 10, the ribs 1223 contact the portable electronic device 10, and the main connector 1224 is electrically connected to the portable electronic device 10.

In this embodiment, the first member 110 has an external connection port 115, and the external connection, port 115 is electrically connected to the externally connected display 20.

With reference to Figs. 1B and 2A, the computer system 1 further comprises an expansion device 30. The expansion device 30 is attached into the expansion slot 123. The expansion device 30 is electrically connected to the portable electronic device 10 via the base 120. The expansion device 30 can be an optical storage device, a portable hard disc, other storage device or other transmission device.

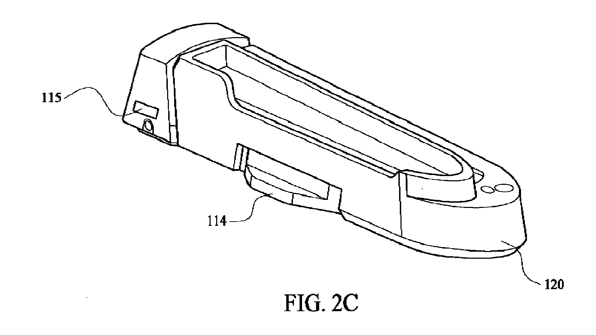

With reference to Fig. 2B, in one embodiment, the second member 120 comprises a protrusion 126, and the second member 110 comprises a first recess 112 and a second recess 113, When the second member 120 is in the first orientation, the protrusion 126 wedges the first recess 112. When the second member 120 is in the second orientation, the protrusion 126 wedges the second recess 113. In this embodiment, an included angle is formed between the first orientation and the second orientation, and the included angle is between 80°-100°, for example, 90°. In a modified example, the number of the recess can be increased allowing the protrusion to position the second member in different orientations. Fig. 2C shows a detailed structure of the base 100, wherein the second member 120 of the base 100 is in the first orientation.

Supporting portions 114 can be formed on the first member 110 to increase stability of the base 100.

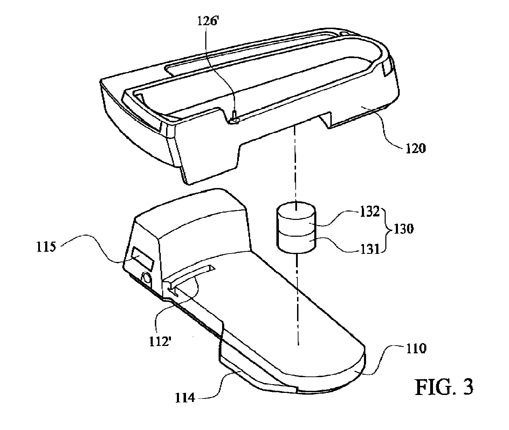

With reference to Fig. 3, in a modified example, the second member 120 includes a positioning block 126', the first member 110 includes a positioning groove 112', and the positioning block 126' slides in the positioning groove 112'. When the second member 120 is in the first orientation, the positioning block 126' abuts an end of the positioning groove 112'.

In the first embodiment of the invention, the first member 110 is longitudinal, and the second member 120 is connected to an end of the first member 110.

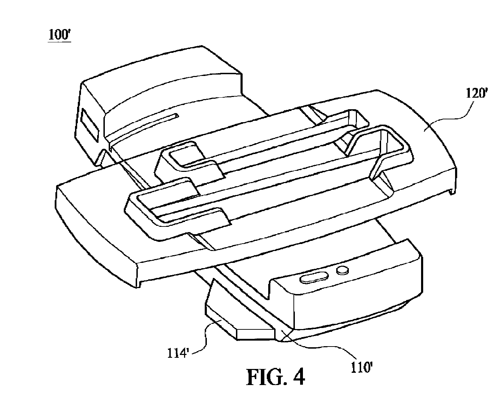

Fig. 4 shows a base 100' of a second embodiment of the invention. The first member 110' is longitudinal, and the second member 120' is connected to a central section of the first member 110'. Similar to the first embodiment, the first member 110' has supporting portions 114' to increase stability of the base 100'.

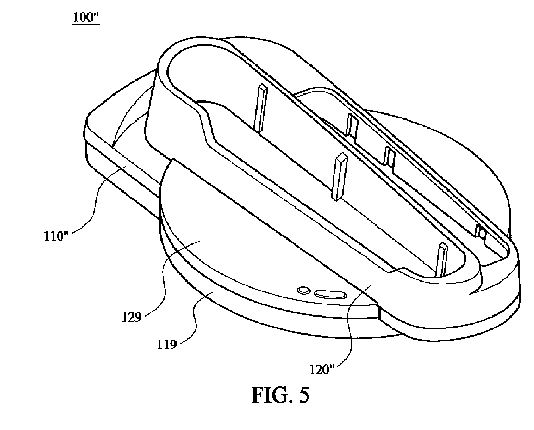

Fig. 5 shows a base 100" of a third embodiment of the invention, wherein the first member 110" comprises a first dish structure 119, the second member 120" comprises a second dish structure 129, the second dish structure 129 is correspondingly connected to the first dish structure 119, and the second dish structure 129 rotates relative to the first dish structure 119. Comparing the bases of the first and second embodiments, the base 100" of the third embodiment is more stable when rotated, and has increased dimensions.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A base which allows a portable electronic device to be attached thereto, comprising:
a first member, comprising an external connection port;
a second member, comprising a socket; and
a pivot element, wherein the pivot element is connected to the first member and the second member, the second member is pivoted relative to the first member between a first orientation and a second orientation via the pivot element, and the portable electronic device is detachably attached into the socket to stand on the second member.

2. The base as claimed in claim 1, wherein the pivot element comprises a first portion and a second portion, the first portion is connected to the first member, the second portion is connected to the second member, the first portion is pivoted relative to the second portion, and the pivot element is connected to the first member and the second member by wedging or screw fixing.

3. The base as claimed in claim 1, wherein the second member comprises a bottom surface and at least one supporting element, and the supporting element protrudes from the bottom surface.

4. The base as claimed in claim 1, wherein the socket has a notch, and when the portable electronic device is attached into the socket, a screen of the portable electronic device faces the notch.

5. The base as claimed in claim 1, wherein the socket comprises a positioning post, and when the portable electronic device is attached into the socket, the positioning post is inserted into the portable electronic device.

6. The base as claimed in claim 1, wherein the socket comprises a plurality of ribs, the ribs are formed on a wall of the socket, and when the portable electronic device is attached into the socket, the ribs contact the portable electronic device.

7. The base as claimed in claim 1, wherein the socket has a main connector disposed therein, and when the portable electronic device is attached into the socket, the main connector is connected to the portable electronic device.

8. The base as claimed in claim 1, wherein second member further comprising an expansion slot, an expansion device is attached into the expansion slot, and the expansion device is electrically connected to the portable electronic device via the base.

9. The base as claimed in claim 1, wherein the second member comprises a protrusion, the first member comprises a first recess and a second recess, the protrusion wedges the first recess when the second member is in the first orientation, and the protrusion wedges the second recess when the second member is in the second orientation.

10. The base as claimed in claim 1, wherein the second member comprises a positioning block, the first member comprises a positioning groove, the positioning block slides in the positioning groove, and when the second member is in the first orientation, the positioning block abuts an end of the positioning groove.

11. The base as claimed in claim 1, wherein an included angle between the first orientation and the second orientation is between 80° - 100°.

12. The base as claimed in claim 1, wherein the first member is longitudinal, and the second member is connected to an end of the first member.

13. The base as claimed in claim 1, wherein the first member is longitudinal, and the second member is connected to a central section of the first member.

14. The base as claimed in claim 1, wherein the first member comprises a first dish structure, the second member comprises a second dish structure, the second dish structure is correspondingly connected to the first dish structure, and the second dish structure rotates relative to the first dish structure.

15. A computer system, comprising:
an externally connected display;
a portable electronic device, comprising a body and a screen, wherein the screen is connected to the body, and the portable electronic device is electrically connected to the externally connected display; and
a base, comprising a first member, a second member and a pivot element, wherein the pivot element is connected to the first member and the second member, the second member is pivoted relative to the first member between a first orientation and a second orientation via the pivot element, and the portable electronic device is detachably attached into the socket to stand on the second member.

16. The computer system as claimed in claim 15, wherein the portable electronic device is electrically connected to the externally connected display via the base.

17. The computer system as claimed in claim 15, further comprising an expansion device detachably disposed on the second member, wherein the expansion device is electrically connected to the portable electronic device via the base.

18. The computer system as claimed in claim 17, wherein the expansion device is an optical storage device or a portable hard disc.

19. The computer system as claimed in claim 15, wherein the portable electronic device is a notebook or a flat panel computer.
